# DEMANDE DE BREVET EUROPEEN

(11) **EP 1 592 205 A2**
(43) Date de publication de la demande: **02.11.2005**
(21) Numéro de dépôt: 05300293.7
(22) Date de dépôt: 19.04.2005
(51) Int. Cl.: H04L 29/06, H04Q 3/66

(54) **Sélection de serveurs de traitement dans un ensemble de serveurs**

(30) Priorité: 28.04.2004 FR 0404535
(71) Demandeur: FRANCE TELECOM, 75015 Paris (FR)
(72) Inventeur: Le Clerc, Philippe, 22300 Lannion (FR); Neveux, Didier, 22140 Cavan (FR); Le Queau, Hélène, 22300 Lannion (FR)
(74) Mandataire: Cabinet Martinet & Lapoux

(57) **Abrégé**

Un serveur de traitement (ST) est sélectionné automatiquement dans un ensemble de serveurs de traitement (ST1-STN) en envoyant une requête en multi-diffusion (REQ) aux serveurs de traitement par un équipement qui peut être un serveur de sessions (SS) ou un terminal (T). Des adresses de serveurs de traitement disponibles ayant répondu à la requête en multi-diffusion (REQ) sont ordonnées dans une liste par ordre d'arrivée afin que le serveur de traitement sélectionné corresponde à la première adresse de la liste ordonnée et traite une requête du terminal (T). La charge de trafic est ainsi répartie entre les serveurs de traitement.

## Description

La présente invention concerne un procédé de sélection automatique d'un serveur de traitement dans un ensemble de serveurs de traitement. Plus précisément, l'invention concerne une sélection d'un serveur à affecter au traitement d'une requête d'un terminal, parmi des serveurs gérant plusieurs phases constitutives d'une session de service, afin de répartir le trafic constitué par des requêtes de terminaux sur l'ensemble de serveurs.

Actuellement, les répartitions de charge de trafic entre des serveurs de traitement sont réalisées par des algorithmes de répartition complexes exécutés depuis des serveurs d'aiguillage.

De plus, les adresses des serveurs de traitement doivent être connues du serveur d'aiguillage, et la mise à jour de ces adresses dans le serveur d'aiguillage n'est pas aisée.

La présente invention a pour **objectif** de remédier aux inconvénients précités en répartissant la charge de trafic sur un ensemble de serveurs de traitement par une sélection spécifique d'un serveur de traitement qui a pour rôle de traiter une requête d'un terminal.

Pour atteindre cet objectif, un procédé de sélection d'un serveur de traitement dans un ensemble de serveurs de traitement afin que le serveur de traitement sélectionné traite une requête d'un terminal, est caractérisé en ce qu'il comprend les étapes suivantes :
envoi d'une requête en multi-diffusion aux serveurs de traitement par un équipement lié au terminal ;
envoi d'une réponse à la requête en multi-diffusion par chaque serveur de traitement à l'équipement ; et
établissement d'une liste ordonnée d'adresses de serveur de traitement disponible au fur et à mesure des réponses des serveurs de traitement reçues dans l'équipement afin que le serveur de traitement sélectionné corresponde à la première adresse de la liste ordonnée.

L'invention est avantageuse en ce qu'elle est basée sur une approche multi-diffusion, c'est-à-dire l'envoi d'une requête depuis l'équipement vers les serveurs de traitement.

Le procédé peut être commandé par l'équipement avant le traitement de chaque requête envoyée par le terminal, ou bien être répété périodiquement par l'équipement.

Un autre avantage de l'invention est de permettre un changement de serveur de traitement des requêtes d'un terminal au cours d'une session du terminal. Ainsi au moins deux requêtes du terminal au cours d'une session peuvent être traitées par des serveurs de traitement sélectionnés différents.

Lorsque le serveur de traitement sélectionné n'est pas opérationnel, l'équipement peut sélectionner une autre adresse de serveur de traitement dans la liste d'adresses de serveur de traitement disponible dont le serveur correspondant devient le serveur de traitement sélectionné.

L'équipement peut être le terminal ce qui évite avantageusement des saturations de serveurs d'aiguillage. Selon une autre réalisation, l'équipement est un serveur de sessions vers lequel est relayée la requête du terminal.

L'invention concerne aussi un système de sélection automatique d'un serveur de traitement comprenant un ensemble de serveurs de traitement et un terminal afin que le serveur de traitement sélectionné traite une requête du terminal. Le système est caractérisé en ce que :
il comprend un équipement lié au terminal pour envoyer une requête en multi-diffusion aux serveurs de traitement ;
chaque serveur de traitement envoie une réponse à la requête en multi-diffusion à l'équipement ; et
l'équipement établit une liste ordonnée d'adresses de serveur de traitement disponible au fur et à mesure des réponses des serveurs de traitement reçues afin que le serveur de traitement sélectionné corresponde à la première adresse de la liste ordonnée.

L'invention a aussi pour objet un équipement de sélection automatique d'un serveur de traitement dans un ensemble de serveurs de traitement afin que le serveur de traitement sélectionné traite une requête d'un terminal. L'équipement est caractérisé en ce qu'il comprend :
un moyen pour envoyer une requête en multi-diffusion aux serveurs de traitement ;
un moyen pour recevoir chacune des réponses d'un serveur de traitement à la requête en multi-diffusion ; et
un moyen pour établir une liste ordonnée d'adresses de serveur de traitement disponible au fur et à mesure des réponses des serveurs de traitement reçues afin que le serveur de traitement sélectionné corresponde à la première adresse de la liste ordonnée.

Enfin, l'invention se rapporte à un programme d'ordinateur apte à être mis en oeuvre dans un équipement pour sélectionner automatiquement un serveur de traitement dans un ensemble de serveurs de traitement afin que le serveur de traitement sélectionné traite une requête d'un terminal, ledit programme comprenant des instructions qui, lorsque le programme est chargé et exécuté dans ledit équipement réalisent les étapes de :
envoyer une requête en multi-diffusion aux serveurs de traitement par un équipement lié au terminal ;
recevoir depuis chaque serveur de traitement une réponse à la requête en multi-diffusion ; et
établir une liste ordonnée d'adresses de serveur de traitement disponible au fur et à mesure des réponses des serveurs de traitement reçues afin que le serveur de traitement sélectionné corresponde à la première adresse de la liste ordonnée.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système de gestion de phase de sessions mettant en oeuvre un procédé de sélection de serveurs de traitement dans un ensemble de serveurs selon une première réalisation de l'invention ;
- la figure 2 est un bloc-diagramme schématique d'un système de gestion de phase de sessions mettant en oeuvre un procédé de sélection d'un serveur de traitement dans un ensemble de serveurs selon une variante de la première réalisation de l'invention ;
- la figure 3 est un algorithme du procédé de sélection d'un serveur de traitement dans un ensemble de serveurs selon les première et deuxième réalisations de l'invention ;
- la figure 4 est un algorithme d'un procédé d'initialisation de sessions mettant en oeuvre le procédé de sélection d'un serveur de traitement dans un ensemble de serveurs selon la première réalisation de l'invention ;
- la figure 5 est un algorithme de procédés de modification, respectivement de clôture, de sessions mettant en oeuvre le procédé de sélection de serveurs de traitement dans un ensemble de serveurs selon la première réalisation de l'invention ;
- la figure 6 est un bloc-diagramme schématique d'un système de gestion de phase de sessions mettant en oeuvre un procédé de sélection de serveurs de traitement dans un ensemble de serveurs selon une deuxième réalisation de l'invention ;
- la figure 7 est un algorithme d'un procédé d'initialisation de sessions mettant en oeuvre le procédé de sélection de serveurs de traitement dans un ensemble de serveurs selon la deuxième réalisation de l'invention ; et
- la figure 8 est un algorithme d'un procédé de modification, respectivement de clôture, de sessions mettant en oeuvre le procédé de sélection de serveurs de traitement dans un ensemble de serveurs selon la deuxième réalisation de l'invention.

Dans la suite de la description, un équipement selon l'invention est un terminal d'usager T ou un serveur de sessions SS.

Une session est composée d'un ensemble de phases de communication entre un terminal d'usager T et un ensemble de serveurs. Les phases principales sont une phase d'initialisation, une ou plusieurs phases de modification et une phase de clôture. Une session est identifiée par un identificateur de session IDS unique. Une session est associée à un terminal T d'usager, par exemple en faisant correspondre l'identificateur de session IDS et l'identificateur de l'usager du terminal T.

Un contexte de session est un ensemble d'informations dépendant d'un service et caractérisant la session en cours d'exécution invoquée depuis un terminal d'usager T. Il contient par exemple une heure de début d'exécution du service offert au cours de la session, un type du service en cours d'exécution, un mode d'accès du terminal au service, un mode de facturation et de manière générale toutes les informations indispensables pour être en mesure de poursuivre l'exécution de la session, telles que des variables de session.

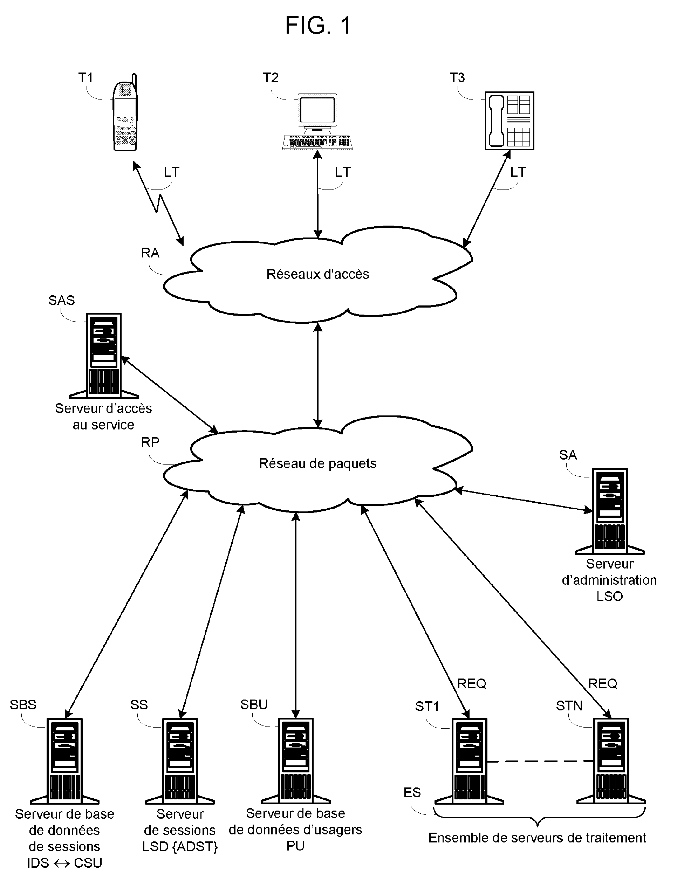

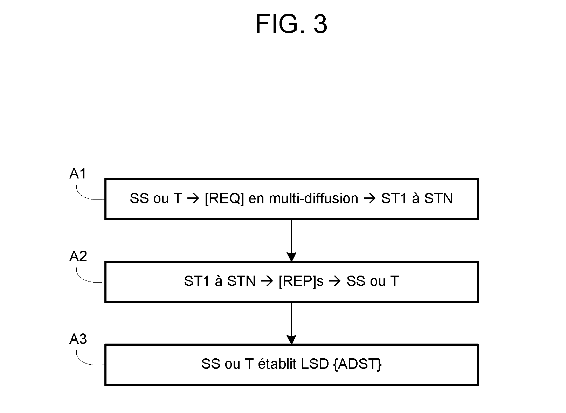

Dans la suite de la description sont décrites une première réalisation de l'invention en référence aux figures 1, 2, 3, 4 et 5 mettant en oeuvre un serveur de sessions SS jouant un rôle d'intermédiaire fonctionnel entre un terminal et des serveurs de traitement, et une deuxième réalisation de l'invention d'architecture plus simple, en référence aux figures 3, 6 et 7, mettant en oeuvre des liaisons directes entre le terminal et les serveurs de traitement. Dans la deuxième réalisation, les fonctions du serveur de sessions sont assurées par le terminal lui-même qui dispose alors d'une application logicielle spécifique pour gérer ces fonctions.

En référence à la figure 1, le système de gestion de phases de session comprend principalement un serveur d'accès au service SAS, un serveur de sessions SS, un serveur de base de données de sessions SBS, un serveur de base de données d'usagers SBU, un serveur d'administration SA, un ensemble ES de serveurs de traitement ST1 à STN, et au moins un terminal T. Dans la figure 1, on n'a représenté seulement trois terminaux d'usager T1, T2 et T3 désignés indifféremment par T dans la suite de la description.

Le terminal T requiert un service auprès du serveur d'accès SAS, au moyen d'une requête, qui la relaie au serveur de sessions SS. Le serveur de sessions SS est l'intermédiaire entre le serveur d'accès au service SAS et les serveurs de traitement ST1 à STN qui traitent les requêtes des terminaux.

Le terminal d'usager T communique avec le serveur d'accès au service SAS à travers des réseaux d'accès RA et un réseau de paquets RP. Le serveur de sessions SS communique avec le serveur d'accès SAS, le serveur de base de données de sessions SBS, le serveur de base de données d'usagers SBU et l'ensemble de serveurs ES à travers le réseau de paquets RP. Les serveurs de traitement ST1 à STN communiquent également avec le serveur de base de données de sessions SBS. Le serveur d'administration SA communique avec les serveurs de traitement ST1 à STN et le serveur de sessions SS.

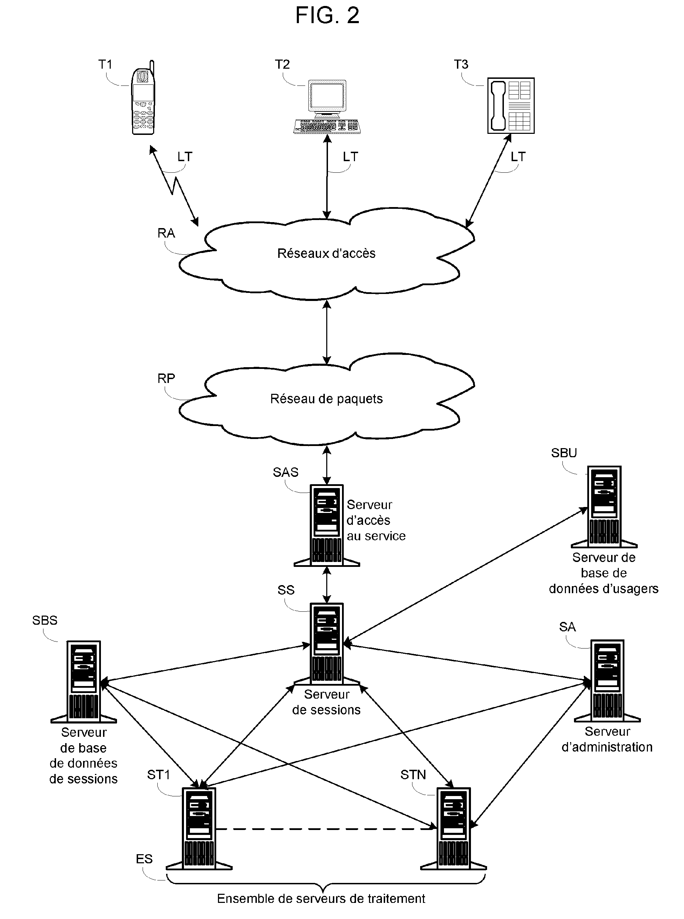

Dans une variante de la première réalisation, représentée à la figure 2, les communications entre les divers serveurs sont identiques, mais s'effectuent via des liaisons internes de type Ethernet et non plus via le réseau de paquets RP. Les liaisons entre les divers serveurs sont indiquées par des flèches.

Selon les première et deuxième réalisations illustrées aux figures 1, 2 et 6, le terminal T est relié à un réseau d'accès respectif RA par une liaison LT.

Le terminal T est par exemple un terminal de radiocommunications cellulaire mobile T1, la liaison LT est un canal de radiocommunications, et le réseau d'accès respectif RA comprend le réseau fixe d'un réseau de radiocommunications, par exemple de type GSM (Global System for Mobile communications) avec un service GPRS (General Packet Radio Service), ou de type UMTS (Universal Mobile Telecommunications System).

Selon un autre exemple, le terminal T est un ordinateur personnel T2, relié directement par modem à la liaison LT de type ligne xDSL ou RNIS (Réseau Numérique à Intégration de Services) reliée au réseau d'accès RA correspondant.

Selon un autre exemple, le terminal T est un terminal fixe de télécommunications T3, la liaison LT est une ligne téléphonique et le réseau d'accès respectif RA comprend le réseau téléphonique commuté. Selon d'autres exemples, le terminal d'usager T comprend un dispositif ou objet électronique de télécommunications personnel à l'usager qui peut être un assistant numérique personnel communiquant PDA. Le terminal T peut être tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge.

Les terminaux d'usager T et les réseaux d'accès RA ne sont pas limités aux exemples ci-dessus et peuvent être constitués par d'autres terminaux et réseaux d'accès connus.

Le serveur de sessions SS est le serveur central du système. Il communique avec l'ensemble des autres serveurs afin de gérer les sessions et la répartition du trafic entre les serveurs de traitement ST1 à STN.

Le serveur d'accès SAS est un équipement de contrôle d'accès au service vers lequel une requête à traiter incluant une adresse de service établie par le terminal T est dirigée. Par exemple le serveur d'accès SAS intègre les fonctionnalités de pare-feu, de routage et de translation d'adresses. L'adresse de service est l'adresse publique du serveur d'accès SAS. Le serveur d'accès SAS traduit l'adresse du service requis par le terminal en une autre adresse, telle que l'adresse du serveur de sessions SS, de manière à masquer au terminal d'usager T les adresses de serveurs, autres que l'adresse de service, liées à ce service.

Les serveurs de traitement ST1 à STN sont des serveurs d'application comme par exemple des applications Web. Les serveurs de traitement délivrent le service souhaité par l'usager. L'ensemble ES des serveurs de traitement selon la première réalisation forme un pool de serveurs qui sont chacun indifféremment accessible par un terminal d'usager via le serveur de sessions SS. L'ensemble ES des serveurs de traitement selon la variante de la première réalisation montrée à la figure 2 est soit un pool de serveurs comme défini ci-dessus, soit un cluster de serveurs qui sont installés sur une machine unique, chaque serveur étant par exemple installé sur une carte de traitement respective dans la machine et faisant office de noeud du cluster.

Le serveur de base de données de sessions SBS contient une base de données mémorisant des identificateurs de sessions IDS et des contextes de sessions CSU associés.

Le serveur de base de données d'usagers SBU contient une base de données de profils d'usagers PU. Un profil d'usager PU est défini par des informations personnelles sur l'usager, telles qu'une adresse, un numéro de téléphone, d'éventuelles informations d'identification, telles qu'un identificateur, un mot de passe, des informations sur des droits d'accès à au moins un service, etc. Les droits d'accès peuvent être également des droits d'accès à certaines opérations, telles que la modification ou la clôture d'une session de service en cours. Le profil d'usager peut être conservé dans un contexte de session.

Le serveur d'administration SA contrôle régulièrement le fonctionnement des serveurs de traitement ST1 à STN afin d'établir ou de mettre à jour une liste d'adresses de serveur de traitement opérationnel LSO. Lorsque la liste LSO est modifiée, le serveur d'administration SA communique automatiquement la liste LSO au serveur de sessions SS selon la première réalisation, qui mémorise en mémoire tampon la liste LSO. Le serveur SA assure également la maintenance et la surveillance des serveurs de traitement ST1 à STN par un administrateur.

En référence à la figure 3, le procédé de sélection d'un serveur de traitement dans un ensemble de serveurs selon la première et deuxième réalisation de l'invention comprend des étapes A1 à A3.

L'objectif des trois étapes A1 à A3 est de définir les serveurs de traitement disponibles pour traiter des requêtes de terminaux. Cette disponibilité est déterminée par une interrogation en multi-diffusion (multicast) des serveurs de traitement ST1 à STN.

A l'étape A1, le serveur de sessions SS selon la première réalisation ou le terminal d'usager T selon la deuxième réalisation, en tant qu'équipement lié au terminal, envoie une requête REQ en multi-diffusion, à tous les serveurs de traitement ST1 à STN. Une requête en multi-diffusion est une requête envoyée simultanément à plusieurs serveurs de traitement. La multi-diffusion de la requête peut être gérée entre le serveur de sessions SS et les serveurs de traitement ST1 à STN selon le protocole de gestion de groupe internet IGMP (Internet Group Management Protocol). Selon un tel protocole de multi-diffusion, le serveur de sessions SS connaît automatiquement les serveurs de traitement appartenant au groupe de multi-diffusion, et la mise à jour de ce groupe est une fonctionnalité gérée nativement dans le protocole de multi-diffusion, en permettant à un serveur de traitement de demander à un équipement SS ou T d'appartenir à ce groupe.

A l'étape A2, chaque serveur de traitement qui est disponible envoie indépendamment des autres serveurs de traitement une réponse REP à la requête REQ à l'équipement SS ou T. L'équipement SS ou T considère comme indisponible un serveur de traitement qui ne transmet pas de réponse REP à la requête REQ pendant une temporisation prédéterminée. Un serveur de traitement ayant un temps de réponse plus grand que la temporisation prédéterminée peut être également considéré comme indisponible.

A l'étape A3, l'équipement SS ou T regroupe les résultats de l'interrogation par la requête en multi-diffusion pour établir une liste LSD d'adresses ADST de serveurs de traitement ST1 à STN qui sont disponibles. L'équipement SS ou T ordonne la liste LSD par ordre d'arrivée des réponses REP des serveurs de traitement, sans calcul intermédiaire, c'est-à-dire selon l'ordre croissant des temps de réponse des serveurs de traitement à la requête, au fur et à mesure des réponses REP des serveurs de traitement disponibles ST1 à STN que l'équipement SS ou T reçoit. Comme décrit dans la suite de la description, le serveur de traitement sélectionné ST correspond à la première adresse de serveur de traitement de la liste ordonnée LSD, et est donc celui ayant le temps de réponse le plus court.

Le procédé de sélection d'un serveur de traitement est garant d'une bonne répartition du trafic entre les serveurs de l'ensemble ES.

En variante, les serveurs de traitement ST1 à STN répondent tant que leur charge est inférieure à un seuil interne de charge. Dans une autre variante, les serveurs de traitement ST1 à STN adaptent leurs temps de réponse respectivement en fonction de leurs charges. Dans cette dernière variante, chaque serveur de traitement détermine lui-même le temps de réponse à imposer à une requête en multi-diffusion.

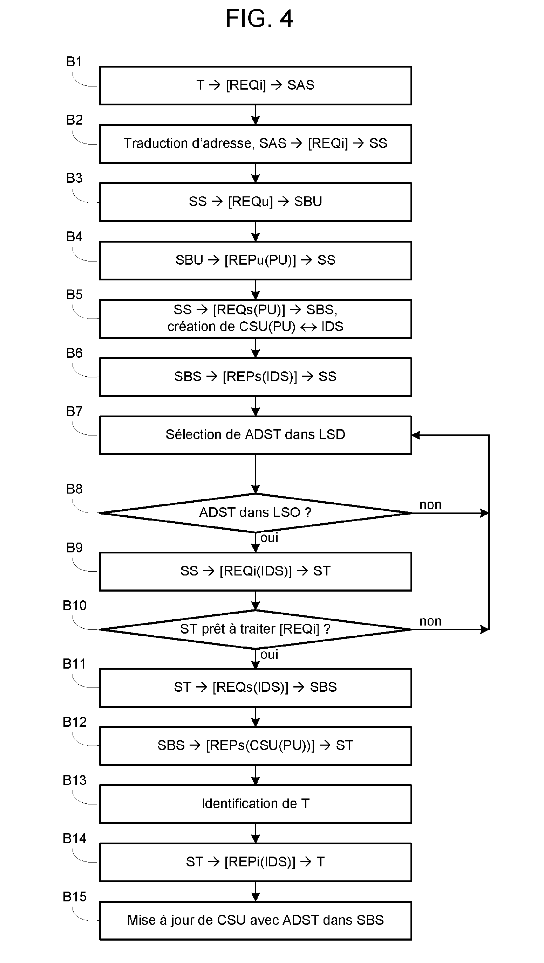

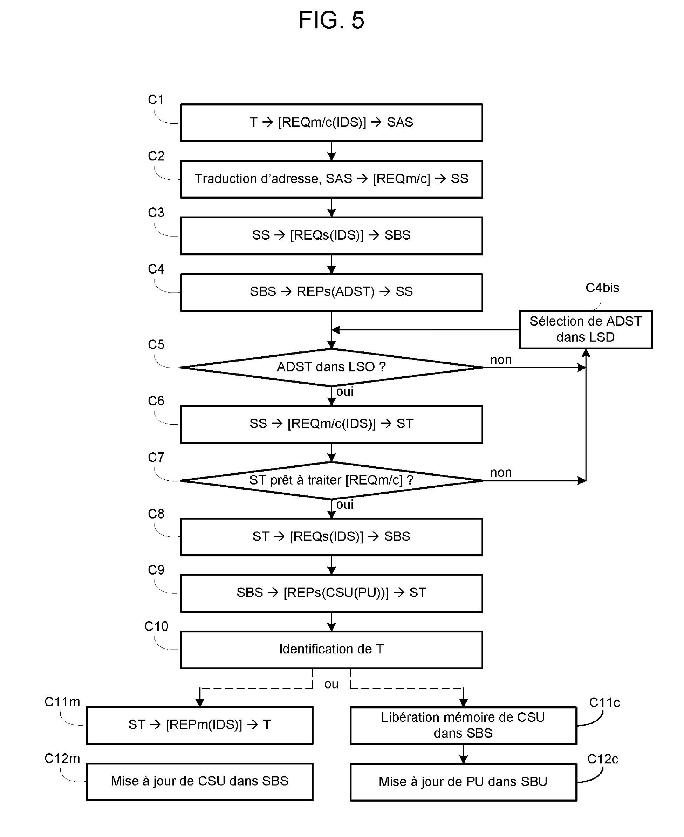

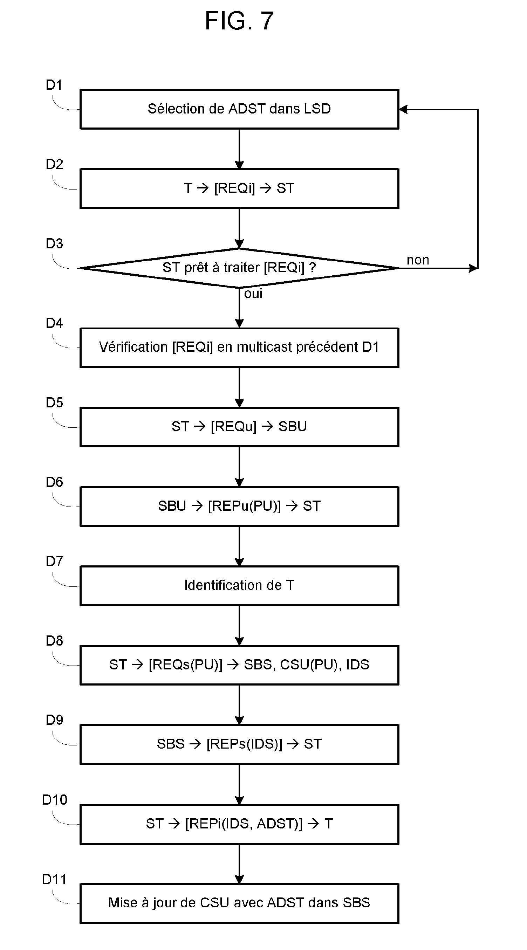

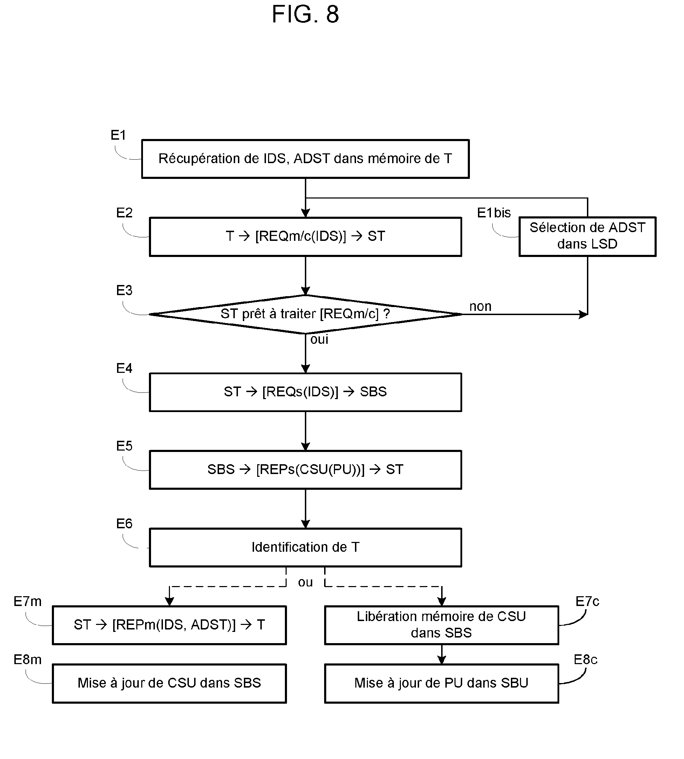

Le procédé de sélection A1 à A3 est répété périodiquement par l'équipement SS ou T, ou bien est commandé par l'équipement SS ou T avant le traitement de chaque requête envoyée par le terminal T, traitement qui est décrit ci-après en référence aux figures 4 et 5 pour la première réalisation et aux figures 7 et 8 pour la deuxième réalisation.

En référence à la figure 4, le procédé d'initialisation de sessions mettant en oeuvre le procédé de sélection d'un serveur de traitement dans un ensemble de serveurs selon la première réalisation de l'invention comprend des étapes B1 à B15.

Dans la première étape B1, le terminal T envoie au serveur d'accès SAS une requête d'initialisation REQi à l'adresse de service. La requête d'initialisation REQi contient notamment des informations identifiant le terminal T et l'usager du terminal T.

Par exemple, les informations identifiant l'usager d'un terminal de télécommunications, comme un ordinateur personnel ou un terminal mobile, peuvent comprendre un identificateur du terminal et un mot de passe.

Le serveur d'accès SAS traduit l'adresse de service en l'adresse du serveur de session SS et transmet la requête d'initialisation REQi au serveur de sessions SS à l'étape B2. Cette traduction d'adresse cache au terminal T les adresses des serveurs intervenant en aval du serveur d'accès SAS. Ainsi, la seule adresse connue du terminal T est l'adresse de service.

Selon une variante de la première réalisation, le serveur d'accès SAS et le serveur de sessions SS sont installés dans ou fusionnés en un serveur commun.

A l'étape B3, le serveur de sessions SS, en tant qu'équipement, envoie une requête d'usager REQu au serveur de base de données d'usagers SBU, afin de récupérer le profil d'usager PU correspondant à l'usager du terminal T en vue de vérifier des droits d'accès de l'usager du terminal T au service requis. La requête d'usager REQu contient notamment les informations d'identification de l'usager et un identificateur de service.

Le serveur de base de données d'usagers SBU envoie au serveur de sessions SS une réponse d'usager REPu à la requête d'usager REQu contenant le profil PU de l'usager du terminal T correspondant aux informations d'identification de l'usager du terminal T à l'étape B4.

A l'étape B5, le serveur de sessions SS vérifie que le profil d'usager reçu contient l'identificateur du service requis, puis transmet une requête de session REQs au serveur de gestion de données de sessions SBS. Sinon le serveur de sessions SS refuse l'accès au service, ce qui est signalé au terminal T via le serveur SAS. La requête de session REQs contient le profil PU de l'usager du terminal T. A cette étape, le serveur de base de données de sessions SBS crée ou initialise un contexte de session d'usager CSU contenant notamment le profil d'usager PU pour le terminal T et génère un identificateur de session IDS afin de mémoriser le contexte de session CSU en association avec l'identificateur de session IDS.

Le serveur de base de données de sessions SBS envoie au serveur de sessions SS l'identificateur de session généré IDS inclus dans une réponse de session REPs à la requête de session REQs, à l'étape B6.

A l'étape B7, le serveur de sessions SS sélectionne la première adresse de serveur de traitement ADST dans la liste d'adresses de serveur de traitement disponible LSD, qui a été établie lors de l'exécution du procédé de sélection de serveurs de traitement aux étapes A1 à A3. La première adresse sélectionnée ADST désigne un serveur de traitement sélectionné ST.

A l'étape B8, le serveur de sessions SS vérifie grâce à la liste d'adresses de serveurs de traitement opérationnel LSO si l'adresse ADST du serveur de traitement sélectionné ST correspond à un serveur de traitement opérationnel.

Lorsque le serveur de traitement sélectionné ST n'est pas opérationnel, la deuxième adresse de serveur de traitement est sélectionné dans la liste LSD et remplace dans la suite du procédé la première adresse de serveur de traitement sélectionnée précédemment à l'étape B7. Le serveur de traitement sélectionné ST est alors le serveur correspondant à la deuxième adresse de serveur de traitement sélectionnée. Ce procédé est réitéré jusqu'à ce que soit sélectionnée une adresse de serveur de traitement présente dans la liste d'adresses de serveur de traitement opérationnel LSO.

Lorsque le serveur de traitement sélectionné ST est opérationnel, le serveur de sessions SS, en tant qu'équipement lié au terminal, envoie la requête d'initialisation REQi du terminal T en y introduisant l'identificateur de session IDS vers le serveur de traitement sélectionné ST, à l'étape B9.

A l'étape B10, le serveur de sessions SS vérifie si le serveur de traitement sélectionné ST est prêt à traiter la requête d'initialisation du terminal T, c'est-à-dire si le serveur de traitement ST n'est pas indisponible, ou ne tarde pas trop à répondre en comparaison à une temporisation prédéterminée.

Lorsque le serveur de traitement sélectionné ST n'est pas prêt à traiter la requête d'initialisation REQi, une deuxième ou nième adresse de serveur de traitement est sélectionnée dans la liste d'adresses de serveur de traitement disponible LSD, comme décrit précédemment selon les étapes B7 à B9.

Lorsque le serveur de traitement sélectionné ST est prêt, le serveur de traitement sélectionné ST envoie au serveur de base de données de sessions SBS une requête de session REQs contenant l'identificateur de session IDS, à l'étape B11, afin de récupérer le contexte de session CSU associé à l'identificateur de session IDS.

A l'étape B12, le serveur de gestion de base de données de sessions SBS envoie au serveur de traitement sélectionné ST une réponse de session REPs contenant le contexte de session CSU qui est associé à l'identificateur de session IDS et incluant le profil PU de l'usager du terminal T.

A l'étape B13, le serveur de traitement sélectionné ST identifie l'usager du terminal T en comparant les informations d'identification contenues dans la requête d'identification REQi reçue lors de l'étape B9 et les informations d'identification contenues dans le profil d'usager PU du contexte de session CSU. Lorsque l'usager du terminal T n'est pas identifié, le serveur de traitement sélectionné ST envoie au terminal T une réponse invitant l'usager à s'identifier à nouveau, ou interrompt simplement la transaction avec le terminal T, à travers le serveur de session SS et le serveur d'accès SAS. L'identification d'usager peut être complétée par une vérification des droits d'accès de l'usager au service requis.

Lorsque l'identification du terminal T a réussi, le serveur de traitement sélectionné ST envoie au terminal T à travers le serveur de session SS et le serveur d'accès SAS une réponse d'initialisation REPi à la requête d'initialisation REQi incluant notamment l'identificateur IDS de la session initialisée, à l'étape B14. L'identificateur de session IDS est mémorisé en mémoire tampon du terminal T pendant toute la durée de la session afin de l'introduire dans des requêtes suivantes pendant le déroulement de la session venant d'être initialisée.

Suite à l'envoi de la réponse REPi au terminal T, le serveur de traitement sélectionné ST commande, à l'étape B15, la mise à jour du contexte de session CSU incluant cette fois-ci l'adresse du serveur de traitement sélectionné ADST dans le serveur de base de données de sessions SBS.

Une fois la session du terminal T initialisée, le terminal T accède au service. Lors de l'accès au service, le terminal T peut modifier la session, puis la clôturer lorsque le terminal interrompt son accès au service.

En référence à la figure 5, le procédé de modification de session et le procédé de clôture de session mettant en oeuvre le procédé de sélection d'un serveur de traitement dans un ensemble de serveurs selon la première réalisation de l'invention comprennent respectivement des étapes C1 à C12m et des étapes C1 à C12c. Les étapes C1 à C10 sont communes aux procédés de modification et de clôture de session.

A l'étape C1, le terminal d'usager T envoie au serveur d'accès SAS une requête de modification de session REQm, respectivement une requête de clôture de session REQc, analogue à la requête d'initialisation REQi et contenant notamment l'identificateur de session IDS.

Le serveur d'accès SAS effectue la traduction d'adresse et relaie la requête REQm, REQc, au serveur de sessions SS à l'étape C2, de la même manière qu'à l'étape B2 dans le procédé d'initialisation.

Le serveur de sessions SS envoie au serveur de base de données de sessions SBS une requête de session REQs incluant l'identificateur de session IDS à l'étape C3.

A l'étape C4, le serveur de base de données de sessions SBS envoie dans une réponse de session REPs l'adresse de serveur de traitement ADST précédemment associée à l'identificateur de session IDS.

A l'étape C5, le serveur de sessions SS vérifie dans la liste d'identificateurs de serveur de traitement opérationnel LSO si le serveur de traitement associé à l'adresse de serveur de traitement ADST envoyée est bien opérationnel, comme à l'étape B8 du procédé d'initialisation. Lorsque le serveur de traitement associé est opérationnel, il est réputé être le serveur de traitement sélectionné ST.

Lorsque le serveur de traitement associé n'est pas opérationnel, la première adresse de serveur de traitement est sélectionnée dans la liste d'adresses de serveur de traitement disponible LSD à une étape C4bis, afin que dans la suite du procédé la première adresse de serveur de traitement remplace l'adresse du serveur de traitement ADST envoyée précédemment, à l'étape C5. Après l'étape C4bis, le procédé reprend à l'étape C5. L'adresse de serveur de traitement sélectionnée dans la liste LSD doit être différente de l'adresse de serveur de traitement envoyée ; sinon la prochaine adresse de serveur de traitement dans la liste LSD est sélectionnée. Les étapes C4bis et C5 sont réitérées, en sélectionnant la deuxième adresse de la liste, puis la troisième, et ainsi de suite jusqu'à ce que soit sélectionnée une adresse de serveur de traitement présente dans la liste d'adresses de serveurs de traitement opérationnel LSO. Le serveur de traitement sélectionné ST correspond alors au serveur de traitement identifié par la dernière adresse sélectionnée.

Le serveur de sessions SS envoie la requête de modification REQm, respectivement la requête de clôture REQc, dans laquelle est introduit notamment l'identificateur de session IDS, au serveur de traitement sélectionné ST, à l'étape C6.

A l'étape C7, le serveur de sessions SS vérifie si le serveur de traitement sélectionné ST est prêt à traiter la requête REQm, REQc du terminal T, comme à l'étape B10.

Lorsque le serveur de traitement sélectionné ST n'est pas prêt à traiter la requête REQm, REQc, une deuxième ou nième adresse de serveur de traitement est sélectionnée dans la liste d'adresses de serveur de traitement disponible LSD, comme décrit précédemment dans les étapes C4bis, C5 et C6. Le serveur de traitement sélectionné ST est alors le serveur correspondant à la dernière adresse de serveur de traitement sélectionnée.

Lorsque le serveur de traitement sélectionné ST est prêt, celui-ci envoie au serveur de base de données de sessions SBS une requête de session REQs contenant l'identificateur de session IDS, à l'étape C8.

A l'étape C9, le serveur de base de données de sessions SBS envoie au serveur de traitement sélectionné ST une réponse de session REPs incluant le contexte de session correspondant à l'identificateur de session IDS. Le contexte de session contenant le profil d'usager PU du terminal T, le serveur de traitement ST identifie l'usager du terminal T à l'étape C10 et éventuellement vérifie ses droits d'accès, comme à l'étape B13 du procédé d'initialisation. Lorsque l'usager n'est pas identifié, ou lorsque l'usager du terminal T n'a pas les droits pour modifier ou clore la session de service en cours, la transaction est interrompue avec le terminal T.

Lorsque l'usager est identifié, le serveur de traitement ST traite la requête de modification REQm, respectivement la requête de clôture REQc.

S'agissant de la requête de modification de session REQm, le serveur de traitement sélectionné ST envoie au terminal T à travers le serveur de session SS et le serveur d'accès SAS une réponse de modification REPm à la requête de modification REQm incluant notamment l'identificateur de session IDS, à l'étape C11m. A l'étape C12m, le serveur de traitement sélectionné ST commande la mise à jour du contexte de session CSU dans le serveur de base de données de sessions SBS. Une modification de session concerne par exemple une modification de la valeur d'une variable de session.

Suite à l'étape C10, lorsqu'il s'agit d'une requête de clôture de session REQc, le serveur de traitement sélectionné ST commande au serveur de base de données de sessions SBS la suppression du contexte de session CSU associé à l'identificateur de session IDS, ainsi que la suppression de toutes les informations liées à cette session à l'étape C11c. La suppression conduit à une libération de l'emplacement de mémoire associé dans le serveur SBS. A l'étape C12c, le serveur de traitement sélectionné ST commande la mise à jour du profil d'usager PU dans le serveur de base de données d'usager SBU, en vue notamment d'établir par un tiers une facture du service.

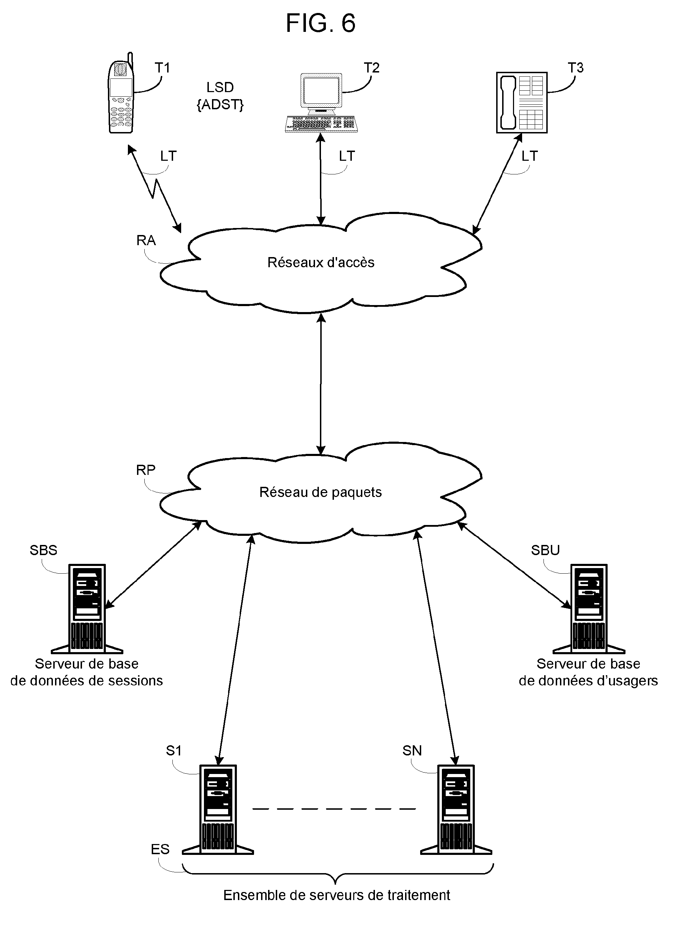

En référence à la figure 6, le système de gestion de phases de session selon la deuxième réalisation comprend principalement le serveur de gestion de base de données de sessions SBS, le serveur de base de données d'usagers SBU, l'ensemble ES de serveurs de traitement ST1 à STN et au moins un terminal T. Le terminal T communique directement avec les serveurs de traitement ST1 à STN et a par conséquent en mémoire une liste des adresses des serveurs de traitement ST1 à STN, ou une adresse de multi-diffusion. L' adresse de multi-diffusion est une adresse unique pointant vers l'ensemble des serveurs de traitement ST1 à STN. Le serveur d'accès au service SAS est inutile puisque le terminal T accède directement aux serveurs de traitement ST1 à STN. Le serveur d'administration SA n'est pas représenté dans la figure 6, parce que celui-ci ne remplit pas de rôle spécifique dans le procédé d'initialisation, de modification et de clôture selon la deuxième réalisation, et n'est cantonné qu'à un rôle de maintenance.

Dans cette deuxième réalisation, l'algorithme du procédé de sélection selon l'invention présenté à la figure 3 est modifié en intégrant des fonctionnalités du serveur de sessions SS, en tant qu'équipement, dans le terminal T lui-même. Le terminal T effectue l'interrogation en multi-diffusion et établit la liste d'adresses de serveur de traitement disponible LSD en fonction des réponses des serveurs de traitement à l'interrogation en multi-diffusion. Afin que le terminal T ne communique pas toujours avec le même serveur de traitement de l'ensemble ES, surtout lors de deux sessions différentes, les serveurs de traitement ST1 à STN doivent vérifier si une requête provenant du terminal T contient au moins un paramètre de multi-diffusion certifiant qu'une interrogation en multi-diffusion à été effectuée précédemment.

En référence à la figure 7, le procédé d'initialisation de sessions mettant en oeuvre le procédé de sélection d'un serveur de traitement dans l'ensemble de serveurs ES selon la deuxième réalisation de l'invention comprend des étapes D1 à D11.

A l'étape D1, le terminal T sélectionne de la première adresse de serveur de traitement ADST dans la liste d'adresses de serveur de traitement disponible LSD.

A l'étape D2, le terminal T, en tant qu'équipement lié au terminal, envoie une requête d'initialisation REQi vers le serveur de traitement précédemment sélectionné ST correspondant à l'adresse ADST sélectionnée à l'étape précédente D1. Dans la requête d'initialisation REQi sont introduits notamment des informations d'identification du terminal T et de l'usager du terminal T.

Le terminal T vérifie si le serveur de traitement sélectionné ST est prêt à traiter la requête d'initialisation REQi du terminal T, à l'étape D3.

Lorsque le serveur de traitement ST n'est pas prêt à traiter la requête d'initialisation REQi, le procédé reprend à l'étape D1, et une deuxième ou nième adresse de serveur de traitement est sélectionnée dans la liste d'adresses de serveur de traitement disponible LSD, et ainsi de suite jusqu'à obtenir une adresse de serveur de traitement correspondant à un serveur de traitement sélectionné ST prêt. Le serveur de traitement sélectionné ST correspond alors au serveur de traitement identifié par la dernière adresse sélectionnée obtenue.

A l'étape D4, le serveur de traitement sélectionné ST vérifie que la requête d'initialisation REQi du terminal T fait suite à une requête en multi-diffusion, par exemple en vérifiant la présence d'un paramètre de multi-diffusion. Lorsque la requête d'initialisation REQi du terminal T ne fait pas suite à une requête en multi-diffusion, la transaction avec le terminal T est rompue.

Lorsque la requête d'initialisation REQi du terminal T fait suite à une requête en multi-diffusion, le serveur de traitement sélectionné ST envoie une requête d'usager REQu incluant les informations d'identification au serveur de base de données d'usagers SBU à l'étape D5.

A l'étape D6, le serveur de base de données d'usagers SBU délivre une réponse REPu à la requête d'usager REQu contenant le profil d'usager PU correspondant aux informations d'identification. Si aucune des informations d'identification n'est associée à un profil d'usager, ou si l'usager du terminal T n'a pas le droit d'accéder au service requis, la transaction est rompue avec le terminal T ; sinon l'usager est identifié à l'étape D7.

A l'étape D8, le serveur de traitement ST envoie au serveur de base de données de sessions SBS une requête de session REQs contenant notamment le profil d'usager PU, afin que le serveur de base de données de sessions SBS crée ou initialise un contexte de session d'usager CSU dans lequel le profil d'usager PU est inclus. Le contexte est mémorisé dans le serveur de base de données de sessions SBS en association avec un identificateur de session IDS généré.

Le serveur de base de données de sessions SBS envoie une réponse de session REPs au serveur de traitement ST contenant l'identificateur de session IDS à l'étape D9.

A l'étape D10, le serveur de traitement sélectionné ST traite la réponse de session REPs et envoie au terminal T une réponse REPi à la requête d'initialisation REQi incluant notamment l'identificateur de session IDS et son adresse ADST.

A l'étape D11, le serveur de traitement sélectionné ST commande la mise à jour de l'adresse de serveur de traitement ADST dans le contexte de session CSU associé au terminal T de l'usager dans le serveur de base de données d'usagers SBU.

Le terminal T mémorise temporairement en mémoire tampon l'identificateur de session IDS et l'adresse de serveur de traitement ADST. L'identificateur de session IDS est mémorisé pendant toute la durée de la session afin de l'introduire dans des requêtes suivantes pendant le déroulement de la session venant d'être initialisée. L'adresse ADST sert à sélectionner en priorité le serveur de traitement précédemment sélectionné ST au début du déroulement de la session.

En référence à la figure 8, le procédé de modification de session et le procédé de clôture de session mettant en oeuvre le procédé de sélection d'un serveur de traitement dans un ensemble de serveurs selon la deuxième réalisation de l'invention comprennent respectivement des étapes E1 à E8m et des étapes E1 à E8c. Les étapes E1 à E6 sont communes aux procédés de modification et de clôture de session.

A l'étape E1, le terminal T récupère dans sa mémoire tampon l'identificateur de session IDS et l'adresse de serveur de traitement ADST.

A l'étape E2, le terminal T envoie au serveur de traitement correspondant à l'adresse de serveur de traitement ADST récupérée, une requête de modification de session REQm, respectivement une requête de clôture de session REQc, analogue à la requête d'initialisation REQi et contenant l'identificateur de session IDS.

Le terminal T vérifie si le serveur de traitement correspondant est prêt à traiter la requête REQm, REQc, du terminal T à l'étape E3.

Lorsque le serveur de traitement correspondant est prêt, le serveur de traitement sélectionné ST est le serveur de traitement correspondant.

Lorsque le serveur de traitement correspondant n'est pas prêt à traiter la requête REQm, REQc, la deuxième ou nième adresse de serveur de traitement est sélectionnée dans la liste d'adresses de serveur de traitement disponible LSD à une étape E1bis, et ainsi de suite jusqu'à obtenir une adresse ADST dont le serveur de traitement associé est prêt. Le procédé continue après l'étape E1bis à l'étape E2. Le serveur de traitement associé prêt correspond alors au serveur de traitement identifié par la dernière adresse sélectionnée.

Le serveur de traitement sélectionné ST envoie au serveur de base de données de sessions une requête de session REQs contenant l'identificateur de session IDS à l'étape E4.

A l'étape E5, le serveur de base de données de sessions SBS envoie au serveur de traitement ST une réponse REPs à la requête de session REQs contenant le contexte de session CSU associé à l'identificateur de session IDS.

Le contexte de session incluant le profil d'usager PU qui a été inséré à l'étape D8 du procédé d'initialisation de session selon la deuxième réalisation, le serveur de traitement ST procède à l'identification de l'usager du terminal T et à la vérification de ses droits à l'étape E6. Lorsque l'utilisateur n'est pas identifié, ou lorsque l'usager du terminal T n'a pas les droits pour modifier ou clore la session de service en cours, la transaction est interrompue avec le terminal T. Sinon, l'usager est identifié et ses droits validés à l'étape E6.

S'agissant de la requête de modification de session REPm, le serveur de traitement sélectionné ST envoie au terminal T une réponse de modification de session REPm à la requête de modification REQm comportant notamment l'identificateur de session IDS et l'adresse du serveur de traitement ADST, à l'étape E7m. A l'étape E8m, le serveur de traitement ST commande la mise à jour du contexte de session CSU dans le serveur de base de données de sessions SBS, comme à l'étape C12m du procédé de modification selon la première réalisation.

Suite à l'étape E6, lorsqu'il s'agit d'une requête de clôture de session REQc, le serveur de traitement sélectionné ST commande au serveur de base de données de sessions SBS la suppression du contexte de session associé à l'identificateur de session IDS, ainsi que la suppression de toutes les informations liées à cette session à l'étape E7c, comme à l'étape C11c du procédé de clôture de session selon la première réalisation. A l'étape E8c, comme à l'étape C12c, le serveur de traitement ST commande la mise à jour du profil d'usager PU dans le serveur de base de données d'usager SBU.

Dans une variante de la deuxième réalisation, après une requête d'initialisation REQi ou une requête de modification de session REQm, le terminal T ne mémorise pas l'adresse du serveur de traitement ADST. Par conséquent, le terminal T ignore l'adresse du serveur de traitement ayant traité la dernière requête et doit exécuter à nouveau les étapes A1 à A3 de sélection d'un serveur de traitement avant chaque envoi de requête. Cette variante requiert des envois de requêtes, respectivement de réponses, plus nombreux et ainsi encombre davantage le réseau, au risque de voir les temps de réponse des serveurs se dégrader.

Dans les deux réalisations, le serveur de traitement sélectionné ST peut changer au cours d'une session, c'est-à-dire entre des phases d'une session.

L'invention décrite ici concerne un procédé et un système de gestion de phase de sessions mettant en oeuvre un procédé de sélection de serveurs de traitement dans un ensemble de serveurs. Selon une implémentation préférée, les étapes du procédé de l'invention sont déterminées par les instructions d'un programme d'ordinateur incorporé dans un équipement, tel que le terminal ou le serveur de session. Le programme comporte des instructions de programme qui, lorsque ledit programme est chargé et exécuté dans ledit équipement, dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.
Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé de sélection automatique d'un serveur de traitement (ST) dans un ensemble de serveurs de traitement (ST1 à STN) afin que le serveur de traitement sélectionné (ST) traite une requête (REQi, REQm, REQc) d'un terminal (T), **caractérisé en ce qu'**il comprend les étapes suivantes
envoi (A1) d'une requête en multi-diffusion (REQ) aux serveurs de traitement (ST1 à STN) par un équipement (T, SS) lié au terminal ;
envoi (A2) d'une réponse (REP) à la requête en multi-diffusion (REQ) par chaque serveur de traitement à l'équipement (T, SS) ; et
établissement (A3) d'une liste ordonnée d'adresses de serveur de traitement disponible (LSD) au fur et à mesure des réponses (REP) des serveurs de traitement (ST1 à STN) reçues dans l'équipement afin que le serveur de traitement sélectionné (ST) corresponde à la première adresse de la liste ordonnée.

2. Procédé conforme à la revendication 1, selon lequel la liste d'adresses de serveur de traitement disponible (LSD) est ordonnée selon l'ordre décroissant des temps de réponse des serveurs de traitement (ST1 à STN) à la requête (REQ).

3. Procédé conforme à la revendication 1 ou 2, commandé par l'équipement (T, SS) avant le traitement de chaque requête (REQi, REQm, REQc) envoyée par le terminal (T).

4. Procédé conforme à l'une quelconque des revendications 1 à 3, répété périodiquement par l'équipement (T, SS).

5. Procédé conforme à l'une quelconque des revendications 1 à 4, selon lequel au moins deux requêtes (REQi, REQm, REQc) du terminal (T) au cours d'une session sont traitées par des serveurs de traitement sélectionnés (ST) différents.

6. Procédé conforme à l'une quelconque des revendications 1 à 5, selon lequel lorsque le serveur de traitement sélectionné (ST) n'est pas opérationnel, l'équipement (T, SS) sélectionne une autre adresse de serveur de traitement dans la liste d'adresses de serveur de traitement disponible (LSD) dont le serveur correspondant devient le serveur de traitement sélectionné (ST).

7. Procédé conforme à l'une quelconque des revendications 1 à 6, selon lequel l'équipement est le terminal (T).

8. Procédé conforme à l'une quelconque des revendications 1 à 7, selon lequel l'équipement est un serveur de sessions (SS) vers lequel est relayée la requête (REQi, REQm, REQc) du terminal (T).

9. Procédé conforme à l'une quelconque des revendications 1 à 8, comprenant un envoi (B9, C6, E2) de la requête (REQi, REQm, REQc) du terminal (T) par l'équipement (T, SS) vers le serveur de traitement sélectionné (ST).

10. Procédé conforme à la revendication 9, comprenant préalablement à l'envoi (B9, C6, E2) de la requête (REQi, REQm, REQc) du terminal (T), une introduction d'un identificateur de session (IDS) dans la requête du terminal.

11. Procédé conforme à la revendication 9 ou 10, comprenant un envoi (B11, C8, E4) d'une requête de session (REQs) contenant l'identificateur de session (IDS) depuis le serveur de traitement sélectionné (ST) à un serveur de base de données de sessions (SBS), et un envoi (B12, C9, E5) d'une réponse à la requête de session (REPs) comprenant un contexte de session (CSU) associé à l'identificateur de session (IDS) depuis le serveur de base de données (SBS) au serveur de traitement sélectionné (ST).

12. Système de sélection automatique d'un serveur de traitement (ST) comprenant un ensemble de serveurs de traitement (ST1 à STN) et un terminal (T) afin que le serveur de traitement sélectionné (ST) traite une requête (REQi, REQm, REQc) du terminal (T), **caractérisé en ce que** :
il comprend un équipement (T, SS) lié au terminal pour envoyer une requête en multi-diffusion (REQ) aux serveurs de traitement (ST1 à STN) ;
chaque serveur de traitement envoie une réponse (REP) à la requête en multi-diffusion (REQ) à l'équipement (T, SS) ; et
l'équipement (T, SS) établit une liste ordonnée d'adresses de serveur de traitement disponible (LSD) au fur et à mesure des réponses (REP) des serveurs de traitement (ST1 à STN) reçues afin que le serveur de traitement sélectionné (ST) corresponde à la première adresse de la liste ordonnée.

13. Equipement (T, SS) de sélection automatique d'un serveur de traitement (ST) dans un ensemble de serveurs de traitement (ST1 à STN) afin que le serveur de traitement sélectionné (ST) traite une requête (REQi, REQm, REQc) d'un terminal (T), **caractérisé en ce qu'**il comprend :
un moyen pour envoyer une requête en multi-diffusion (REQ) aux serveurs de traitement (ST1 à STN) ;
un moyen pour recevoir chacune des réponses (REP) d'un serveur de traitement à la requête en multi-diffusion (REQ) ; et
un moyen pour établir une liste ordonnée d'adresses de serveur de traitement disponible (LSD) au fur et à mesure des réponses (REP) des serveurs de traitement (ST1 à STN) reçues afin que le serveur de traitement sélectionné (ST) corresponde à la première adresse de la liste ordonnée.

14. Programme d'ordinateur apte à être mis en oeuvre dans un équipement (T, SS) pour sélectionner automatiquement un serveur de traitement (ST) dans un ensemble de serveurs de traitement (ST1 à STN) afin que le serveur de traitement sélectionné (ST) traite une requête (REQi, REQm, REQc) d'un terminal (T), ledit programme comprenant des instructions qui, lorsque le programme est chargé et exécuté dans ledit équipement(T, SS) réalisent les étapes de :
envoyer (A1) une requête en multi-diffusion (REQ) aux serveurs de traitement (ST1 à STN) par un équipement (T, SS) lié au terminal ;
recevoir (A2) depuis chaque serveur de traitement une réponse (REP) à la requête en multi-diffusion (REQ) ; et
établir (A3) une liste ordonnée d'adresses de serveur de traitement disponible (LSD) au fur et à mesure des réponses (REP) des serveurs de traitement (ST1 à STN) reçues afin que le serveur de traitement sélectionné (ST) corresponde à la première adresse de la liste ordonnée.
